Europäisches Patentamt

European Patent Office

Office européen des brevets

(11) Numéro de publication: **0 461 025 B1**

## (12) FASCICULE DE BREVET EUROPEEN

(45) Date de publication de fascicule du brevet: **10.05.95** (51) Int. Cl.⁶: **B62D 1/18**

(21) Numéro de dépôt: **91401457.6**

(22) Date de dépôt: **04.06.91**

(54) **Dispositif pour le réglage de la position d'une colonne de direction réglable.**

(30) Priorité: **07.06.90 FR 9007091**

(43) Date de publication de la demande:
**11.12.91 Bulletin 91/50**

(45) Mention de la délivrance du brevet:
**10.05.95 Bulletin 95/19**

(84) Etats contractants désignés:
**BE DE ES GB IT NL SE**

(56) Documents cités:
**EP-A- 0 315 823**
**DE-A- 3 732 817**

**PATENT ABSTRACTS OF JAPAN, vol. 10, no. 191 (M-495)[2247], 4 juillet 1986;& JP-A-61 36 056 (MAZDA) 20-02-1986**

(73) Titulaire: **NACAM**
**Z.I. No 2,**
**Route de Blois**
**F-41100 Vendôme (FR)**

(72) Inventeur: **Fevre, Laurent**
**6, résidence de la Guesle - apt. 8**
**F-28230 Epernon (FR)**
Inventeur: **Haldric, Bernard**
**15, rue Charles Lindbergh,**
**Le Temple**
**F-41100 Vendome (FR)**
Inventeur: **Foulquier, Jacques**
**39, rue Mermoz**
**Saint Ouen,**
**F-41100 Vendome (FR)**

(74) Mandataire: **Phélip, Bruno et al**
**c/o Cabinet Harlé & Phélip**
**21, rue de La Rochefoucauld**
**F-75009 Paris (FR)**

EP 0 461 025 B1

## Description

La présente invention concerne les véhicules automobiles et tout spécialement leurs colonnes de direction, et a plus particulièrement pour objet un dispositif motorisé pour la commande et le réglage de la position d'une colonne de direction réglable.

La tendance contemporaine de l'industrie automobile vise non seulement à améliorer les performances techniques des véhicules mais aussi à améliorer le confort des occupants et tout spécialement de celui du conducteur de manière à pouvoir adapter, au moins partiellement et localement, la géométrie de l'habitacle à la morphologie d'un passager et en particulier du conducteur. C'est notamment le cas du volant qui termine la colonne de direction afin que la position de celui-ci, en profondeur et/ou inclinaison, puisse être choisie et fixée en fonction de l'état des sièges du véhicule et de la morphologie du conducteur et/ou de son style, de sa conduite.

Les véhicules automobiles qui sont équipés de colonnes de direction réglables en profondeur et/ou en inclinaison, sont actuellement munis pour certains d'entre eux d'une motorisation qui fait appel à des moteurs électriques distincts pour la commande et le réglage de la profondeur et pour la commande et le réglage de l'inclinaison. Ces moteurs particuliers pour les deux degrés de liberté, qui sont le plus souvent mobiles, sont aussi associés à des transmissions particulières pour chaque degré de liberté. Un autre dispositif est l'objet du document DE-A-3732817 dont les caractéristiques correspondent au préambule de la revendication 1.

On conçoit facilement que l'utilisation de deux moteurs et de deux transmissions grève les coûts aussi bien de par la fourniture des composants que de par leur assemblage et leur montage. Outre cet aspect économique, il y a lieu d'ajouter les contraintes qui résultent de l'entretien et/ou de la réparation ou du dépannage liés à l'existence de composants relativement nombreux et complexes dont la présence ne fait qu'augmenter les risques de défaillance.

Le but de l'invention vise à remédier à la plupart des inconvénients des solutions actuelles à l'aide d'un dispositif qui utilise un moteur unique et une transmission spéciale et qui permet de commander et de régler l'un ou l'autre des déplacements en profondeur et en inclinaison d'une colonne de direction réglable pour véhicules automobiles.

Ce but est atteint grâce à un dispositif comportant les caractéristiques définies dans la revendication 1.

D'autres caractéristiques de l'invention ressortiront de la lecture de la description et des revendications qui suivent et de l'examen du dessin annexé, donné seulement à titre d'exemple où :

- la Figure 1 est une coupe longitudinale axiale partielle d'un mode de réalisation d'un dispositif selon l'invention;
- la Figure 2 est une section selon le plan 2-2 de la Figure 1;
- la Figure 3 est une vue de détail schématique d'un mode de réalisation de la transmission du dispositif selon l'invention;
- la Figure 4 est une vue de détail schématique d'un autre mode de réalisation de la transmission du dispositif selon l'invention;, et;
- la Figure 5 est une vue analogue à celle de la Figure 1 d'un autre mode de réalisation.

Les colonnes de direction d'automobiles réglables en profondeur et/ou en inclinaison étant bien connues dans la technique, on ne décrira par la suite que ce qui concerne directement ou indirectement l'invention. Pour le surplus, le spécialiste de la technique considérée puisera dans les solutions courantes classiques à sa disposition pour faire face aux problèmes particuliers auxquels il est confronté.

Dans la suite, on utilise toujours un même numéro de référence pour identifier un élément homologue quel que soit le mode de réalisation particulier concerné.

Pour la commodité de l'exposé, on décrira successivement chacun des constituants du dispositif selon l'invention avant d'en expliquer le fonctionnement.

Le dispositif motorisé de commande et de réglage de la position d'une colonne de direction réglable en profondeur et inclinaison pour véhicules automobiles selon l'invention, est destiné à être monté directement ou indirectement sur la structure 10 d'un véhicule équipée d'une colonne de direction 20 réglable en profondeur et inclinaison. Ce dispositif comprend un moteur unique 30, une transmission 40 entraînée par le moteur 30 et une commande 50 reliée au moteur 30 et à la transmission 40.

La colonne de direction 20, de tout type courant classique, d'axe X comprend un arbre 21 fait d'un tronçon 211 d'extrémité destiné à porter un volant 200 et d'un tronçon intercalaire 212. Ce tronçon intercalaire 212 est fait de deux parties 2121 et 2122 réunies l'une à l'autre par une jonction 2120 qui permet à ces deux parties de coulisser parallèlement à l'axe X, l'une par rapport à l'autre, tout en étant solidaires en rotation. Cette jonction est, par exemple obtenue par des profils complémentaires à section droite non-circulaire ou par des cannelures. Ces tronçons 211 et 212 sont reliés l'un à l'autre par des cardans 213 de liaison.

L'arbre 21 est logé dans une gaine 22 qui comprend un corps fixe 221 et un corps mobile 222. Le corps fixe 221 est fixé à la structure 10 par toute technique classique appropriée, par exemple soudage ou vissage. Comme on peut l'observer, le corps mobile 222 est fait d'un élément 2221 coulissant par rapport au corps fixe 221 et d'un élément 2222 basculant relativement à l'élément coulissant 2221. Les éléments 2221 et 2222 sont reliés l'un à l'autre par l'intermédiaire d'une articulation 2220 qui présente un axe Y orthogonal à l'axe X de la colonne. Cette articulation 2220 est de préférence située à l'aplomb du cardan 213 assurant la liaison entre les tronçons 211 et 212, comme clairement illustré. Des paliers 223 supportent l'arbre 21 dans sa gaine 22.

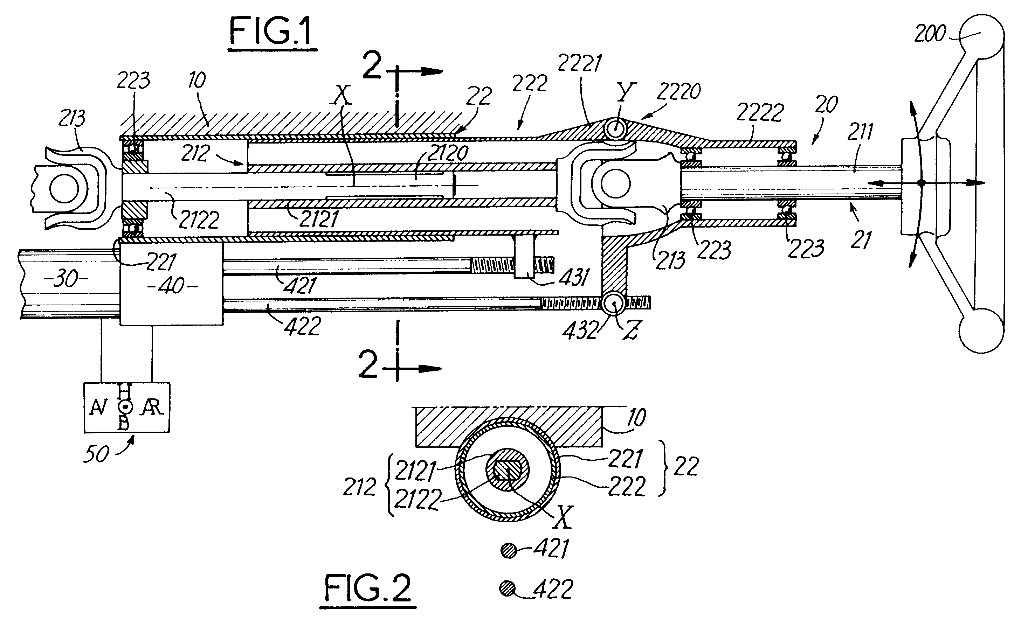

Une telle colonne de direction, dont le détail de la structure, du montage et de l'assemblage résulte clairement de l'examen de la Figure 1 permet donc un réglage en profondeur et en inclinaison et cela dans les deux sens opposés du volant, comme schématisé par les flèches doubles. Le réglage en profondeur dans les deux sens résulte du coulissement relatif des parties 2121 et 2122 du tronçon 212 selon l'axe X. Le réglage en inclinaison dans les deux sens résulte du basculement relatif des éléments 2221 et 2222 du corps 222 selon l'axe Y orthogonal à l'axe X. On observera que pour permettre un basculement du volant selon l'axe Y de l'articulation 2220, il est nécessaire que l'un des paliers 223, et tout spécialement le palier qui se trouve à proximité du cardan situé à gauche sur la Figure 1, c'est-à-dire placé à l'extrémité du tronçon intercalaire 212 opposé au tronçon 211, soit du type sphérique par exemple un roulement dit sphérique.

Le moteur 30, de préférence électrique, unique est monté sur la gaine 22 par exemple et de préférence sur son corps fixe 221, directement ou par l'intermédiaire de la transmission 40 comme illustré.

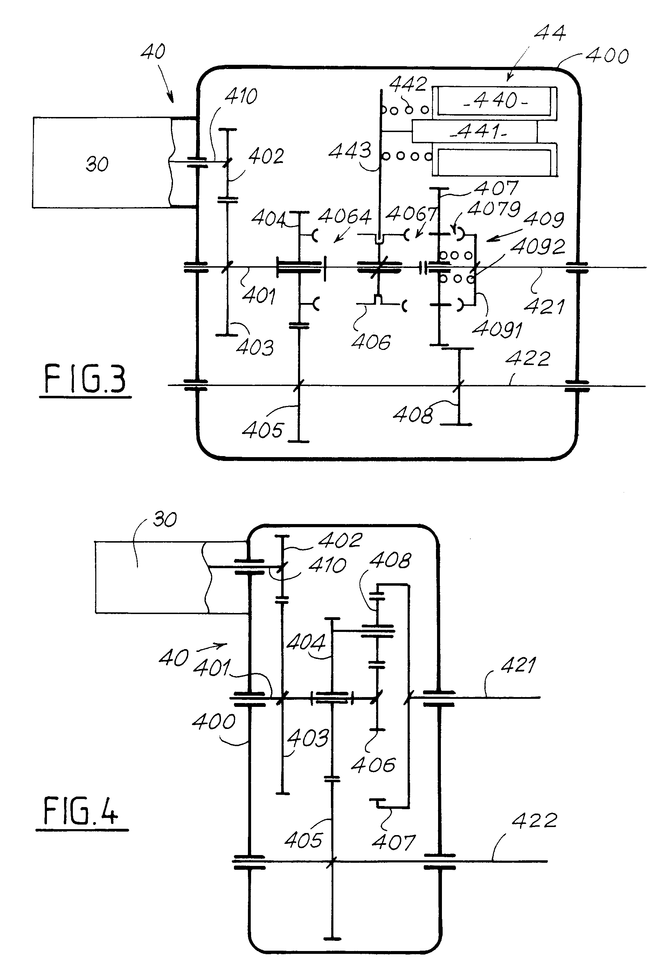

La transmission 40 du dispositif selon l'invention dont divers modes de réalisation sont représentés schématiquement en détail sur les Figures 3 et 4, est intercalée entre le moteur 30 et la gaine 22. Cette transmission comprend une entrée 410 reliée au moteur 30 et deux sorties 421, 422 associées au corps mobile 222; ces sorties sont de préférence montées de manière que la sortie 421 soit reliée à l'élément coulissant 2221 et de manière que la sortie 422 soit reliée à l'élément basculant 2221. Ces liaisons sont assurées à l'aide de jonctions 431, 432 du type vis-écrou dont l'écrou est porté par les éléments 2221 et 2222 comme illustré. On observera tout particulièrement en examinant la Figure 1, que la jonction 432 qui relie la sortie 422 à l'élément basculant 2222 est située à l'opposé de l'articulation 2220 par rapport à l'axe X, et est mobile selon un axe Z parallèle à l'axe Y de l'articulation 2220. On observera aussi que, de préférence, l'axe Y n'est pas concourant avec le centre de rotation du cardan 213 qui assure la liaison entre les tronçons 211 et 212.

Le mode de réalisation de cette transmission illustré sur la Figure 3 est du type boîte de vitesses à pignons et baladeur mise en oeuvre par un actionneur 44 de préférence électro-mécanique. Comme on peut l'observer, cette transmission 40 est logée dans un carter 400 qui comprend un arbre 401 paralléle à l'entrée 410 oui est elle de préférence coaxiale à la sortie 421 et parallèle à la sortie 422. Ces arbre, entrée et sorties sont montés de toute manière appropriée classique dans le carter de manière à pouvoir y tourner. Comme on peut l'observer, l'entrée 410 porte un pignon 402 fixé, calé, entraîné en rotation. L'arbre 401 porte des pignons 403, 404 et un baladeur 406. Le pignon 403 est fixé et calé sur l'arbre 401 et engrène avec le pignon 402. Le pignon 404 est monté fou en rotation sur l'arbre 401 mais est immobilisé axialement sur ce dernier de manière à ne pas pouvoir coulisser. Le baladeur 406 est lui monté sur l'arbre 401 de manière à pouvoir coulisser sur celui-ci axialement tout en étant calé de manière à être entraîné en rotation. Un tel montage du baladeur 406 sur l'arbre 401 est obtenu de toute manière courante classique par exemple à l'aide de cannelures. La sortie 421 qui est coaxiale à l'arbre 401 mais distincte de celui-ci, porte un pignon 407 qui est à la fois fou sur la sortie et monté mobile axialement sur cette dernière. La sortie 421 porte aussi un accouplement ou embrayage 409 constitué d'une cloche 4091 solidaire en rotation de la sortie, et d'un ressort 4092 interposé entre la cloche et le pignon 407, comme illustré, de manière à normalement tendre à éloigner le pignon de la cloche. La sortie 422 porte, deux pignons 405 et 408 qui sont fixes axialement et calés en rotation sur la sortie. Le pignon 405 engrène avec le pignon 404 et le pignon 408 engrène en permanence avec le pignon 407 fou et mobile axialement avec lequel il demeure toujours en prise.

Des crabots 4064, 4067, 4079, de tout type courant classique, sont disposés comme illustré. Le crabot 4064 permet de mettre en prise, à volonté pour qu'ils tournent simultanément, le pignon 404 et le baladeur 406. Le crabot 4067 permet de mettre en prise à volonté, pour qu'ils tournent simultanément, le baladeur 406 et le pignon 407. Le crabot 4079 permet à volonté de solidariser en rotation le pignon 407 et la cloche 4091 de l'accouplement ou embrayage 409. L'actionneur 44 comprend par exemple un électro-aimant 440 dont le plongeur 441 est relié, après interposition d'un ressort 442, à une tige 443 terminée par exemple par une fourchette ou analogue engagée dans une gorge ou similaire du baladeur 406 de manière à en commander le coulissement axial.

Dans ce mode de réalisation, l'électro-aimant est du type "contact-travail". De la sorte, lorsque l'électro-aimant 440 n'est pas excité, le ressort 442 repousse normalement le baladeur 406 en direction du pignon 404 de manière à enclencher le crabot 4064. Dans une telle situation, on voit que si l'entrée tourne dans un sens ou dans l'autre, elle entraîne le pignon 402, dans un sens ou l'autre, qui à son tour fait mouvoir le pignon 403 qui entraîne l'arbre 401 et le baladeur 406 calé sur lui et qui est en prise avec le pignon 404 engrènant sur le pignon 405 calé sur la sortie 422. La sortie 422 tourne seule alors que la sortie 421 demeure fixe puisque le pignon 408 calé sur la sortie 422 engrène sur le pignon 407 fou sur la sortie 421 car le crabot 4079 n'est pas enclenché. Au contraire, si l'électro-aimant 440 est exité, le plongeur 441 est attiré et le ressort 442 comprimé. Dans une telle situation, le baladeur 406 est repoussé en direction du pignon 407 qui lui-même est repoussé par ce dernier en direction de la cloche 4091 à l'encontre du ressort 4092 qui se comprime. On voit que les crabots 4067 et 4079 sont enclenchés et solidarisent alors en rotation respectivement d'une part le baladeur 406 calé et le pignon 407 fou et d'autre part le pignon 407 fou avec la cloche 4091 calée. Dans une telle situation, on voit alors que si l'entrée tourne dans un sens ou dans l'autre les deux sorties 421 et 422 sont entraînées simultanément par l'intermédiaire du baladeur 406 et du pignon 407 en prise mutuelle et aussi par le pignon 407 à la fois accouplée à la cloche 4091 calée sur la sortie 421 et engrènant sur le pignon 408 calé sur la sortie 422.

Sur la Figure 4, on a représenté une transmission qui se présente sous la forme d'un train épicycloïdal. Dans un tel cas, l'actionneur 44 non représenté agit sur un des pignons du train. On voit que suivant que l'actionneur freine ou bloque le pignon concerné, la sortie 421 est entraînée ou ne l'est pas, alors que la sortie 422 est elle toujours entraînée.

En particulier, on voit que si l'actionneur immobilise le satellique 408 par rapport au pignon 406, l'ensemble des pignons 403, 404, 407 et 408 tournent d'un bloc. Les deux sorties 421 et 422 sont activées et on assure le réglage en profondeur. Si l'actionneur immobilise maintenant le pignon 407 par rapport au carter 400, on voit que seule la sortie 422 est activée et on assure alors le réglage en inclinaison. On observera que dans les deux situations la sortie 422 est tojours activée par l'intermédiaire des pignons 404 et 405.

La mise en oeuvre du dispositif suivant l'invention est assurée par une commande 50 qui permet de faire fonctionner le moteur 30 et l'actionneur 44. Cette commande est par exemple du type manche à balai ou "joy-stick" utilisé par exemple pour !a commande électrique de l'orientation des rétroviseurs extérieurs d'automobiles. Cette commande, de préférence du type commutateur à cinq positions comprend une position inactive ou neutre où le dispositif est arrêté et quatre positions actives. Deux des positions actives correspondent à la commande et au réglage en profondeur dans les deux sens opposés , une pour chaque sens, et les deux autres positions actives correspondent à la commande et au réglage en inclinaison dans les deux sens opposés, une pour chaque sens. L'agencement de cette commande est telle qu'elle permet s'il y a lieu d'assurer le déplacement à vitesse constante ou non.

Il est clair que cette commande 50 peut aussi se présenter, par exemple, sous la forme de deux commutateurs distincts du type inverseur à position neutre médiane au besoin à rappel automatique; dans un tel cas un commutateur est utilisé pour la commande de la profondeur et l'autre pour la commande de l'inclinaison.

On se reportera maintenant à la Figure 1. On voit que si la sortie 421 n'est pas activée et que si seule la sortie 422 opère, la jonction 432 se déplace dans l'un ou l'autre des deux sens opposés en faisant basculer l'élément 2222 autour de l'articulation 2220 dont l'axe Y est perpendiculaire au plan de la figure. Ceci permet de modifier, vers le haut ou vers le bas, l'inclinaison du volant. En effet, dans ce cas l'élément 2221 demeure fixe et seul l'élément 2222 bascule.

Si maintenant on fait en sorte que les sorties 421 et 422 sont animées simultanément de manière à déplacer simultanément, dans le même sens et avec la même vitesse, les jonctions 431 et 432, les éléments 2221 et 2222 demeurent fixes relativement l'un à l'autre tout en coulissant ensemble d'un bloc par rapport au corps fixe 221. Dans un tel cas, on règle la profondeur du volant, en l'approchant ou en l'éloignant du conducteur, sans pour autant modifier son inclinaison.

Si l'on désigne par
* $L$ la distance qui sépare les axes Y et Z
* $P_t$ le pas de la jonction vis/écrou 431
* $P_r$ le pas de la jonction vis/écrou 432
* $\omega$ (oméga) la vitesse angulaire relative de l'élément 2222 par rapport à l'élément 2221
* $V_t$ la vitesse de translation de l'élément 2221 par rapport au corps 221 ou à la structure 10
* $V_r$ la vitesse de translation de la jonction 432 par rapport au corps 221 ou à la structure 10.

On a la relation $V_r = L.\omega$ (oméga).

Pour un déplacement en inclinaison du volant, dans un sens ou dans l'autre, on maintient la sortie 421 fixe et l'on fait tourner la sortie 422 à la vitesse angulaire $\omega_{r1}$ (oméga$_{r1}$). On choisit celle-ci de manière que

$$\omega_{r1} = \frac{V_r}{P_r} = \frac{L\omega}{P_r}$$

Pour obtenir un déplacement en profondeur du volant, dans un sens ou dans l'autre, on fait en sorte comme indiqué précédemment que $V_t$ soit égale $V_r$. Si la sortie 421 tourne à une vitesse $\omega_t$ - (oméga$_t$) choisie de manière que

$$\omega_t = V_t/P_t,$$

on fait tourner la sortie 422 à la vitesse angulaire $\omega_{r2}$ (oméga$_{r2}$) ce qui oblige à choisir oméga$_{r2}$

$$\omega_{r2} = V_r/P_r = V_t/P_r = P_t/P_r.\omega t.$$

On choisit le nombre de dents des différents pignons de manière à obtenir les vitesses angulaires $\omega_t$ (oméga$_t$), $\omega_{r1}$ (oméga$_{r1}$) et $\omega_{r2}$ (oméga$_{r2}$) comme déterminé précédemment.

Dans le mode de réalisation illustré sur la Figure 1, moteur 30 et transmission 40, solidaires de la structure 10 par l'intermédiaire du corps fixe 221 de la gaine 22, sont fixes. Une telle solution offre des avantages nombreux et très appréciables. Il y a tout d'abord une réduction notable de l'encombrement résultant de l'utilisation d'un moteur unique qui du fait de son immobilité ne "balaye" pas un volume appréciable lors du fonctionnement. Il y a ensuite une réduction de la masse résultant de l'utilisation d'un moteur unique qui permet une amélioration sensible du comportement dynamique du dispositif soumis à des vibrations.

Il y a lieu de noter que ce montage n'est toutefois pas le seul possible.

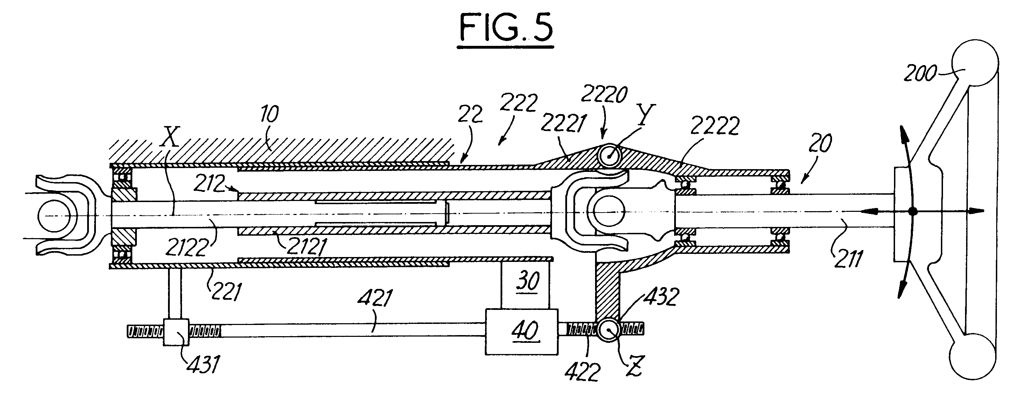

En effet, moteur 30 et transmission 40 peuvent être rendus solidaires de l'élément coulissant 2221. Dans un tel cas, les sorties 421 et 422 ne sont plus côte à côte mais situées de part et d'autre et l'écrou de la jonction 431 est alors porté par le corps fixe 221 et l'autre par l'élément basculant 2222. Ceci est représenté en détail sur la Figure 5.

On peut faire en sorte aussi que moteur 30 et transmission 40 soient rendus solidaires de l'élément basculant 2222. Dans un tel cas, les sorties 421 et 422 sont toujours côte à côte et les écrous de jonction 431 et 432 sont alors portés l'un par le corps fixe 221 et l'autre par l'élément coulissant 2221.

On comprend donc tout l'intérêt du dispositif selon l'invention qui permet d'obtenir le réglage d'une colonne de direction avec deux degrés de liberté, en inclinaison et en profondeur, et cela dans les deux sens avec un moteur unique et à l'aide d'une commande unique agissant sur le moteur et la transmission.

## Revendications

1. Dispositif motorisé de commande de réglage de la position d'une colonne de direction réglable en profondeur et inclinaison pour véhicule automobile où la colonne de direction (20) comprend un arbre (21) fait d'un tronçon d'extrémité (211) destiné à porter un volant et d'un tronçon intercalaire (212) extensible ou rétractible constitué de deux parties assemblées par une jonction coulissante, des cardans de liaison (213) réunissant ces tronçons; ledit dispositif comprend un corps fixe (221) relié au véhicule et un corps mobile (222) constitué d'un élément (2221) coulissant relativement au corps fixe (221) et d'un élément (2222) basculant relativement à l'élément coulissant (2221) à l'aide d'une articulation (2220) d'axe (Y) orthogonal à l'axe (X) de la colonne, et des paliers (223) supportant l'arbre (21) dans le corps mobile (222) un moteur (30) unique, une transmission (40) qui est associée au moteur (30) et qui présente une entrée (410) reliée au moteur (30) et deux sorties (421, 422), de manière que l'une (421) de celles-ci provoque la translation et l'autre (422) de celles-ci provoque l'inclinaison, et qui sont agencées afin que les deux sorties (421, 422) soient activées à des vitesses relatives appairées pour assurer le réglage en profondeur des deux éléments (2221, 2222) du corps mobile (222) et des tronçons (211, 212) d'arbre (21) qu'ils portent, et afin qu'une seule des sorties (421, 422) soit activée pour assurer le réglage en inclinaison de l'élément basculant (2222) et du tronçon d'arbre (211) qu'il porte, dont la jonction avec la sortie correspondante (422) a un axe Z parallèle à l'axe Y de l'articulation, et une commande reliée au moteur (30) et à la transmission (40) pour en assurer le fonctionnement pour la translation dans les deux sens opposés permettant le réglage en profondeur ou pour le basculement dans les deux sens opposés permettant le réglage en inclinaison; caractérisé en ce que le corps fixe (221) et le corps mobile (222) constituent une gaine (22), le corps mobile (222) coulissant dans le corps fixe (221) dans le sens axial, chaque sortie (421, 422) étant associée à la gaine (22) par une jonction (431, 432) qui est située à l'opposé de l'articulation (2220) par rapport à l'axe (X) de la colonne.

2. Dispositif conforme à la revendication 1, caractérisé en ce que chaque jonction (431, 432) est du type vis-écrou dont l'écrou est porté par la gaine et dont la vis est portée par la sortie.

**3.** Dispositif conforme à la revendication 1 ou 2, caractérisé en ce que le moteur (30) et la transmission (40) sont fixes et portés directement ou indirectement par le corps fixe (221), et en ce que l'une (421) des sorties est reliée à l'élément coulissant (2221) pour en provoquer la translation et l'autre (422) des sorties est reliée à l'élément basculant (2222) pour en provoquer l'inclinaison.

**4.** Dispositif conforme à la revendication 1 ou 2, caractérisé en ce que le moteur (30) et la transmission (40) sont mobiles et portés par le corps mobile (222).

**5.** Dispositif conforme à la revendication 4, caractérisé en ce que le moteur (30) et la transmission (40) sont portés par l'élément coulissant (2221), et en ce que l'une (421) des sorties est reliée directement ou indirectement au corps fixe (221) et l'autre (422) des sorties est reliée à l'élément basculant (2222).

**6.** Dispositif conforme à la revendication 4, caractérisé en ce que le moteur (30) et la transmission (40) sont portés par l'élément basculant (2222) et en ce que l'une (422) des sorties est reliée à l'élément coulissant (2221) et l'autre (421) des sorties est reliée directement ou indirectement au corps fixe (221).

**7.** Dispositif conforme à l'une quelconque des revendications 2 à 6, caractérisé en ce que la jonction (432) a l'écrou qui est porté par l'élément basculant (2222).

**8.** Dispositif selon l'une quelconque des revendications précédentes, caractérisé en ce que la transmission (40) est une boîte de vitesses à pignons et baladeur.

**9.** Dispositif conforme à l'une quelconque des revendications 1 à 7, caractérisé en ce que la transmission (40) est un train épicycloïdal.

**10.** Dispositif selon l'une quelconque des revendications précédentes, caractérisé en ce que la transmission (40) comprend un actionneur (44) électromagnétique.

## Claims

**1.** Motorised position adjusting device for a steering column that can be adjusted in termes of depth and inclination for a motor vehicle whereas the steering column (20) comprises a shaft (21) made of an end section (211) designed for supporting a wheel and an intermediate section (212), extendible or retractable, made of two sections assembled by a sliding junction, linking cardans(213) uniting these sections; the said device comprisinga fixed body (221) connected to the vehicle and a mobile body (222) made of an element (2221) which slides with respect to the fixed body (221) and of an element (2222) which pivots with respect to the sliding element (2221) by means of an articulation (2220) of the axis (Y) at right angle with respect to the axis (X) of the column, as well as bearings (223) supporting the shaft (21) in the mobile body (222), a single engine (30), a transmission (40) which is associated with the engine (30) and which exhibits an input (410) connected to the engine (30) and two outputs (421, 422) so that one (421) of those induces the translation and the other (422) of those induces the inclination motion, and which are arranged so that both outputs (421, 422) can be actuated at paired relative speeds in order to ensure the adjustment in terms of depth of both elements (2221, 2222) of the mobile body (222) and of the sections (221, 212)of the shaft(21) that they support, and so that only one of the outputs (421, 422) can be actuated in order to ensure the adjustment in terms of inclination of the pivoting element (2222) and of the shaft section (211) that it supports, whose junction with the corresponding output (422) exhibits an axis (Z)parallel to the axis (Y) of the articulation, and a control connected to the engine (30) and to the transmission (40) in order to ensure its operation for the translation in both opposite directions enabling the adjustment in terms of depth or inclination in both opposite directions enabling adjustment in terms of inclination, characterised in that the fixed body (221) and the mobile body (222) form a sleeve (22), whereby the mobile body (222) slides into the fixed body (221) in the axial direction, every output (421, 422) being associated with the sleeve (22) by a junction (431, 432) located at the opposite end of the articulation (2220) with respect to the axis (X) of the column.

**2.** Device according to claim 1, characterised in that every junction (431, 432) is of the screw-nut type, whose nut is supported by the sleeve and whose screw is supported by the output.

**3.** Device according to claim 1 or 2, characterised in that the engine (30) and the transmission (40) are fixed and supported directly or indirectly by the fixed body (221) and in that one (421) of the outputs is connected to the sliding element (2221) in order to cause the translation and the other one (422) of the outputs is connected to the pivoting element (2222) to cause its inclination.

4. Device according to claim 1 or 2, characterised in that the engine (30) and the transmission (40) are mobile and supported by the mobile body (222).

5. Device according to claim 4, characterised in that the engine (30) and the transmission (40) are supported by the sliding element (2221) and in that one (421) of the outputs is connected directly or indirectly to the fixed body (221) and the other one (422) of the outputs is connected to the pivoting element (2222).

6. Device according to claim 4, characterised in that the engine (30) and the transmission (40) are supported by the pivoting element (2222) and in that one (422) of the outputs is connected to the sliding element (2221) and the other one (421) of the outputs is connected directly or indirectly to the fixed body (221).

7. Device according to any one of claims 2 to 6, characterised in that the junction (432) contains the nut which is supported by the pivoting element (2222).

8. Device according to any one of the preceding claims, characterised in that the transmission (40) is a gear-box with pinions and a sliding shaft.

9. Device according to any one of claims 1 to 7, characterised in that the transmission (40) is an epicycloid train.

10. Device according to any one of the preceding claims, characterised in that the transmission (40) comprises an electromagnetic actuator (44).

**Patentansprüche**

1. Motorisierte Steuerungsvorrichtung zum Einstellen der Position einer Lenksäule eines Kraftfahrzeugs, die in ihrer Länge und in ihrer Neigung verstellt werden kann, mit einer Welle (21) mit einem Endstück (211), an dem ein Lenkrad befestigt werden kann, und mit einem Mittelstück (212), das ausfahrbar bzw. einziehbar ist, und das aus zwei Teilen besteht, die über eine Gleitverbindung miteinander verbunden sind, wobei Kardangelenke (213) die Stücke miteinander verbinden, fernerhin mit einem mit dem Fahrzeug fest verbundenen Körper (221) und mit einem beweglichen Körper (222), der ein Gleitelement (2221) aufweist, das relativ zu dem gehäusefesten Körper (221) gleiten kann, sowie mit einem weiteren Bauelement (2222), das mit Hilfe eines Gelenks (2220) relativ zu dem Gleitelement (2221) kippbar ist, wobei die Kippachse (Y) sich senkrecht zur Achse (X) der Lenksäule erstreckt, wobei weiterhin Lager (223) vorgesehen sind, die die Welle (21) im beweglichen Körper (222) tragen, ferner mit einem einzigen Motor (30), einer mit dem Motor verbundenen Transmission (40) mit einem an den Motor angeschlossenen Eingang (410) und mit zwei Ausgängen (421, 422), von denen einer (421) die Translation und der andere (422) die Neigung erzeugt und die so angeordnet sind, dass beide Ausgänge (412,422) mit abgestimmten Relativgeschwindigkeiten aktiviert werden, un die Tiefenverstellung der beiden Elemente (2221, 2222) des beweglichen Körpers (222) sowie der Stücke (211, 212) der Welle (21), die sie tragen, zu erzeugen, und dass ein einziger der Ausgänge (421, 422) aktiviert wird, um die Neigungsverstellung des Kippelements (2222) sowie desjenigen Wellenstücks (211), das es trägt, sicherzustellen, dessen Verbindung mit dem entsprechenden Ausgang (422) eine Achse (Z) hat, die parallel zur Kipp- oder Schwenkachse (Y) verläuft , und wobei eine Steuerung mit dem Motor (30) und mit der Transmission (40) verbunden ist, um zur Längenverstellung das Funktionieren für die Translationsbewegung in den beiden entgegengesetzten Richtungen oder für die Neigungsverstellung das Kippen in den beiden entgegengesetzten Richtungen sicherzustellen,
**dadurch gekennzeichnet,**
daß der gehäusefeste Körper (221) und der bewegliche Körper (221) eine Hülle oder ein Hüllrohr (21) ausbilden, wobei der bewegliche Körper (222) in axialer Richtung im gehäusefesten Körper (221) gleitet, und daß jeder Ausgang (421, 422) der Hülle (22) über eine Verbindung (431, 432) zugeordnet ist, die sich in Bezug auf die Achse (X) der Lenksäule gegenüber dem Gelenk (2220) befindet.

2. Steuerungsvorrichtung nach Anspruch 1,
**dadurch gekennzeichnet,**
daß jede Verbindung (431, 432) als Schraubverbindung mit einer Gewindemutter ausgebildet ist, wobei die Mutter an der Hülle befestigt ist und die Schraube am Ausgang.

**3.** Steuerungsvorrichtung nach Anspruch 1 oder 2,
**dadurch gekennzeichnet,**
daß der Motor (30) und die Transmission (40) direkt oder indirekt am gehäusefesten Körper (221) befestigt und dort getragen sind, und daß einer der Ausgänge (421) mit dem Gleitelement (2221) verbunden ist, um die Translation hervorzurufen, während der andere Ausgang (422) mit dem Kippelement (2222) verbunden ist, um die Kippbewegung zu erzeugen.

**4.** Steuerungsvorrichtung nach Anspruch 1 oder 2,
**dadurch gekennzeichnet,**
daß der Motor (30) und die Transmission (40) beweglich sind und vom beweglichen Körper (222) getragen werden.

**5.** Steuerungsvorrichtung nach Anspruch 4,
**dadurch gekennzeichnet,**
daß der Motor (30) und die Transmission (40) vom Gleitelement (2221) getragen sind, und daß einer der Ausgänge (421) direkt oder indirekt mit dem gehäusefesten Körper (221) verbunden ist, während der andere Ausgang (422) mit dem Kippelement (2222) verbunden ist.

**6.** Steuerungsvorrichtung nach Anspruch 4,
**dadurch gekennzeichnet,**
daß der Motor (30) und die Transmission (40) vom Kippelement (2222) getragen werden und daß einer der Ausgänge (422) mit dem Gleitelement (2221) verbunden ist, während der andere Ausgang direkt oder indirekt mit dem gehäusefesten Körper (221) in Verbindung steht.

**7.** Steuerungsvorrichtung nach einem der Ansprüche 2 - 6,
**dadurch gekennzeichnet,**
daß die Verbindung (432) die Gewindemutter aufweist, die vom Kippelement (2222) getragen wird.

**8.** Steuerungsvorrichtung nach einem der vorangehenden Patentansprüche,
**dadurch gekennzeichnet,**
daß die Transmission (40) als Getriebe mit Zahnrädern und Schubgabeln oder Schiebewellen ausgebildet ist.

**9.** Steuerungsvorrichtung nach einem der Patentansprüche 1-7,
**dadurch gekennzeichnet,**
daß die Transmission (40) als epizykloidischer Getriebezug ausgebildet ist.

**10.** Steuerungsvorrichtung nach einem der vorangehenden Patentansprüche,
**dadurch gekennzeichnet,**
daß die Transmission (40) eine elektromagnetische Betätigungsvorrichtung (44) aufweist.

FIG.1

FIG.2

FIG.3

FIG.4

FIG.5